Europäisches Patentamt

(19) European Patent Office

Office européen des brevets

(11) Publication number: **0 039 231**
**B1**

(12) **EUROPEAN PATENT SPECIFICATION**

(45) Date of publication of patent specification: 25.07.84

(51) Int. Cl.³: **H 01 G 4/18, H 01 B 3/30**

(21) Application number: **81301857.9**

(22) Date of filing: **28.04.81**

(54) Dielectric polymer materials.

(30) Priority: **28.04.80 JP 56817/80**

(43) Date of publication of application:
**04.11.81 Bulletin 81/44**

(45) Publication of the grant of the patent:
**25.07.84 Bulletin 84/30**

(84) Designated Contracting States:
**CH DE FR GB IT LI NL SE**

(56) References cited:
**DE - B - 1 704 762**
**FR - A - 2 254 430**
**GB - A - 706 067**
**US - A - 3 857 827**
**US - A - 4 076 929**
**US - A - 4 173 033**

(73) Proprietor: **KUREHA KAGAKU KOGYO KABUSHIKI KAISHA**
**9-11 Horidome-cho 1-chome Nihonbashi Chuo-ku Tokyo (JP)**

(72) Inventor: **Sakagami, Teruo**
**3 Machida Ushiroda-machi**
**Iwaki-shi Fukushima-ken (JP)**
Inventor: **Arakawa, Noriyuki**
**128-6 Kanekodaira Azumada-machi**
**Iwaki-shi Fukushima-ken (JP)**
Inventor: **Nakamura, Kenichi**
**154-3 Harada Nishiki-machi**
**Iwaki-shi Fukushima (JP)**
Inventor: **Teramoto, Yoshikichi**
**55-1 Sekishita Nishiki-machi**
**Iwaki-shi Fukushima-ken (JP)**

(74) Representative: **Bass, John Henton et al,**
**REDDIE & GROSE 16 Theobalds Road**
**London WC1X 8PL (GB)**

Courier Press, Leamington Spa, England.

# Description

The present invention relates to a dielectric polymer material which possesses a high dielectric constant which varies to only a small extent over a wide range of temperatures.

U.S. Patent No. 4 076 929 discloses the use of vinylidene fluoride polymers, preferably as the homopolymer but optionally with one or more copolymers such as ethylene trifluoride or ethylene chloride trifluorides, as insulation materials having good melt flow properties. However, this disclosure does not address itself to the problem of the relationship between the dielectric constant of the material and its temperature, and the preferred vinylidene fluoride homopolymer has a dielectric constant which is considerably temperature dependent.

Japanese Patent Publication No. 69,000/1977 discloses dielectric polymer materials which are composed of bipolymers consisting of ethylene trifluoride and vinylidene fluoride, and possess a high dielectric constant. These bipolymers, however, have dielectric constants which have high dependence on temperature and may be varied to a great extent with a slight change in temperature within the normally used range i.e. from room temperature to 100°C. For example, where the amount of vinylidene fluoride is 55 mol%, the dielectric constant, which is about 20 at about 50°C, jumps to a high dielectric constant of about 57 when the temperature is raised to about 85°C. Although the temperature at which the maximum dielectric constant is exhibited varies with composition of the bipolymer, these bipolymers have a common characteristic property that the dependence of their dielectric constants upon temperature is great regardless of the composition of the bipolymer. The high dependence of a dielectric constant upon temperature means that where a rapid change in temperature occurs, for example in a condenser, a rapid change in the function of storing electricity also occurs, and that, where a dielectric material is employed as a binder of dispersed electroluminescent materials or the like, a rapid change in temperature gives rise to a rapid reduction in brightness.

Polyvinylidene fluoride possesses a dielectric constant of about 8 to 16 at room temperature which does not vary greatly with temperature, although it may vary with the orientation of the dielectric material. Accordingly, there has been demanded a dielectric material which possess a high dielectric constant and does not undergo change in dielectric constant to a great extent over a wide range of temperatures.

Accordingly, an object of the present invention is to provide a dielectric polymer material which possesses the property that its dielectric constant does not vary to a great extent over a wide range of temperatures.

Another object of the present invention is to provide a dielectric polymer material which possesses a higher dielectric constant than polyvinylidene fluoride.

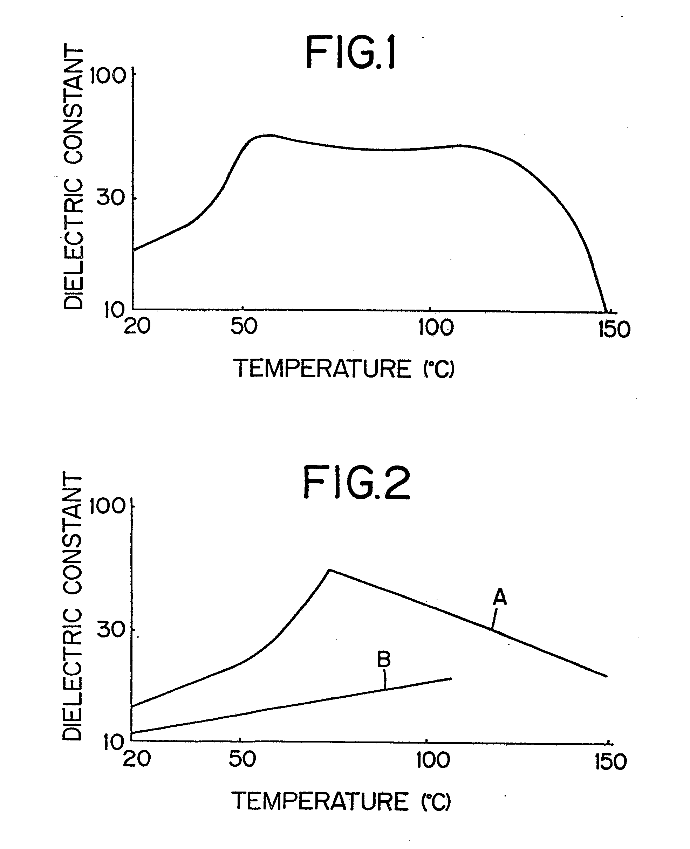

In the drawings, Figs. 1 to 6 are graphs illustrating the relationships of dielectric constants, of both the dielectric materials in accordance with the present invention and the known materials, with a variation in temperature.

The dielectric polymer material in accordance with the present invention comprises vinylidene fluoride, ethylene trifluoride and ethylene chloride trifluoride. The amount of vinylidene fluoride ranges from 25 to 90 mol% and, preferably, from 30 to 85 mol%. The amount of ethylene trifluoride ranges from 5 to 70 mol% and, preferably, from 10 to 65 mol%. The amount of ethylene chloride trifluoride ranges from 0.5 to 30 mol% and, preferably, from 1 to 25 mol%. Where amounts of ethylene trifluoride and vinylidene fluoride are outside the above ranges, the dielectric constants of the dielectric polymer materials are rendered too low. Where amounts of ethylene chloride trifluoride are beyond the upper limit, the dielectric constants of the materials are likewise rendered too low and, where they are smaller than the lower limit, the dependence of the dielectric constants of the materials upon temperature is rendered too great.

The dielectric polymer materials in accordance with the present invention may contain small amounts of one or more of other fluorine-containing monomers such as vinyl fluoride, ethylene tetrafluoride, propylene hexafluoride and so forth.

The copolymers constituting the dielectric polymer materials in accordance with the present invention may be prepared generally by usual polymerization methods which are applicable to polyvinylidene fluoride polymers, such as suspension polymerization, solution polymerization, emulsion polymerization and other suitable methods. The copolymers prepared by the abovementioned methods are random polymers and they can be prepared easily, with a high yield.

The copolymers to be employed in the present invention are readily soluble at room temperature or at elevated temperatures in a polar organic solvent such as dimethylformamide, dimethylacetamide, methylethylketone, acetone or the like. The solutions may be cast readily into films, or the copolymers may be thermally converted into films or sheets in a conventional manner, for example by means of a hot press, an extruder or a calender. Particularly, where a thin film is desired, the copolymers may be drawn or stretched uniaxially or biaxially by means of a rolling mill or the like.

The dielectric polymer materials in accordance with the present invention may contain the copolymers prepared in the abovementioned manner in an amount of at least 50% by weight and further may contain an additive such as a strongly dielectric ceramic material or a blend of such materials.

The present invention will be further described by way of working examples.

Example 1

A stainless autoclave equipped with a stirrer was filled with a 0.29% aqueous solution of perfluorooctanoic acid in which 70% of the carboxyl groups were converted into the sodium salt, as an emulsifying agent. After the solution was cooled to 5°C, hydrogen peroxide as a polymerization initiator and other polymerization acids were added. After the mixture had been stirred well under nitrogen the autoclave was cooled externally by means of a methanoldry ice system and vinylidene fluoride, ethylene trifluoride, and ethylene chloride trifluoride were then introduced under pressure into the autoclave from containers so as to amount to 65 mol%, 30 mol% and 5 mol%, respectively. The autoclave was then heated to initiate polymerization and the polymerization reaction was continued while maintaining the outside temperature at 25°C. The initial pressure of polymerization was 32 kg/cm² and the pressure was continuously reduced to 25 kg/cm² for 3 hours and at the final stage to 5 kg/cm². At the final stage, the residual pressure was released to terminate the polymerization reaction, whereby a pale blue emulsion was produced. The emulsion was then subject to salting-out with sodium chloride, washed well with water and dried to give a white terpolymer in powder form, with a yield of 90%. The powdery material was hotpressed at 200°C to form a film having a thickness of about 150 microns.

The film was found to be a flexible film having a favorable transparency and a melting point of 140°C when measured by means of DSC. The dielectric constants of the films were measured at 30 Hz by means of a rheolograph (manufactured by Toyo Seiki Kabushiki Kaisha). The results are shown in Figure 1 from which it is found that the dielectric constant was about 17.8 at 20°C and about 50 in a range from 50°C to 120°C, with a slight variation with temperature. The dielectric dissipation factor (tan $\delta$) was 0.056.

Comparative Examples 1 and 2

A bipolymer comprising 55 mol% of vinylidene fluoride and 45 mol% of ethylene trifluoride (Comparative Exxample 1) was measured for its dielectric constants at a variety of temperature. The curved line A in Figure 2 indicates that the dielectric constant of the copolymer is greatly dependent upon temperature.

The curved line B in Figure 2 indicates the dependence of the dielectric constant of polyvinylidene fluoride homopolymer (Comparative Example 2) upon temperature. It was also found that the dielectric constant varied to a great extent with temperature.

Example 2

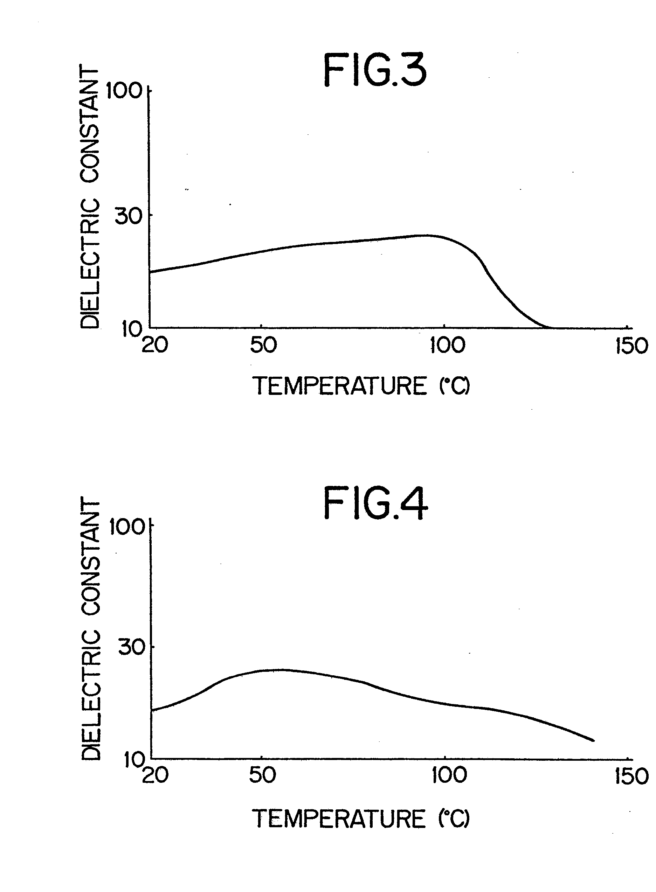

Transparent films were prepared by following the procedure of Example 1, using 75 mol% of vinylidene fluoride, 15 mol% of ethylene trifluoride and 10 mol% of ethylene chloride trifluoride. The dielectric constant of the films at various temperatures were measured at 30 Hz. The results are shown in Figure 3, in which the dielectric constants were lower as a whole than those of Example 1, but they did not vary to a great extent with temperatures ranging from room temperature to 100°C.

Example 3

Transparent films were prepared by following the procedure of Example 1, using 50 mol% of vinylidene fluoride, 45 mol% of ethylene trifluoride and 5 mol% of ethylene chloride trifluoride. The resultant terpolymer was measured for the dependence of its dielectric constant upon temperature at 30 Hz. The results are shown in Figure 4 which shows substantially the same dielectric constant over a range of temperatures lower than 100°C as in Example 2.

Example 4

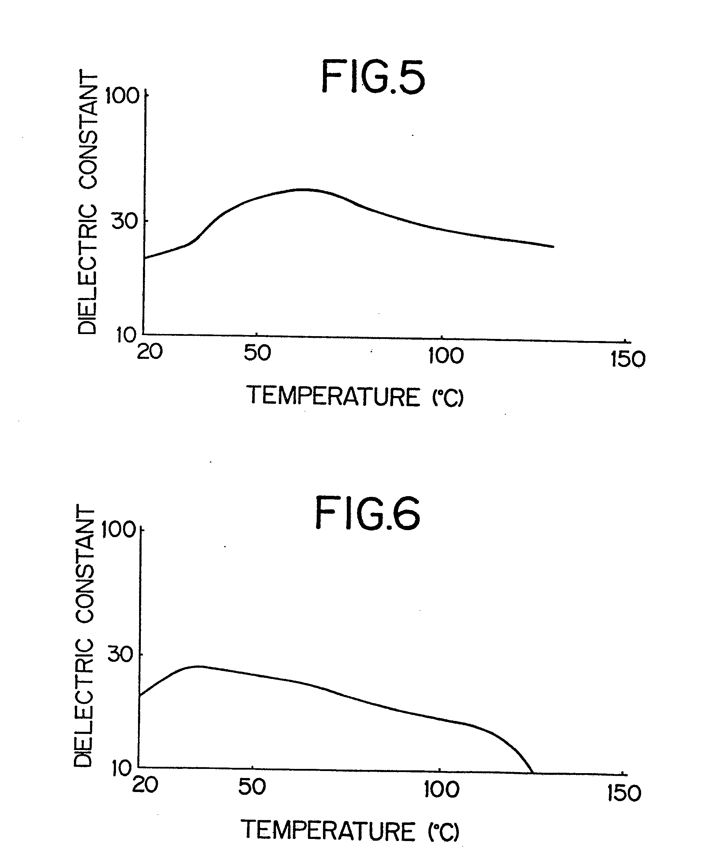

The terpolymer prepared in Example 1 was stretched uniaxially by 4.8 times its original length at 50°C and its dielectric constant was found to be 22 at 25°C as illustrated in Figure 5. When compared with the unstretched film prepared in Example 1, the dielectric constant of this stretched film was higher at a temperature range near room temperature and lower at higher temperatures. Accordingly, the dependence of the dielectric constant upon temperature is further improved in this case.

Example 5

The terpolymers were prepared in the same manner as in Example 1, using 60 mol% of vinylidene fluoride, 30 mol% of ethylene trifluoride and 10 mol% of ethylene chloride trifluoride. The variation of its dielectric constant with temperature is shown in Figure 6.

It can be seen from the above Examples that the dielectric polymer materials in accordance with the present invention possess higher dielectric constant over a range of temperatures from room temperature to 100°C than those of polyvinylidene fluoride homopolymer and that the dependence of their dielectric constants upon temperature is less than that of vinylidene fluoride-ethylene trifluoride copolymer; accordingly, they are industrially useful.

**Claims**

1. A dielectric polymer material comprising a terpolymer of at least 75% vinylidene fluoride with ethylene trifluoride and ethylene chloride trifluoride characterised in that it comprises 25 to 90 mol% of vinylidene fluoride, 5 to 70 mol% ethylene trifluoride and 0.5 to 30 mol% of ethylene chloride trifluoride.

2. A dielectric polymer material according to Claim 1, wherein vinylidene fluoride is in an amount of 30 to 85 mol%.

3. A dielectric polymer material according to Claim 1, wherein ethylene trifluoride is in an amount of 10 to 65 mol%.

4. A dielectric polymer material according to Claim 1, wherein ethylene chloride trifluoride is in an amount of 1 to 25 mol%.

5. A dielectric polymer material according to Claim 1, further containing a small amount of a fluorine-containing monomer.

6. A dielectric polymer material according to Claim 5, wherein the fluorine-containing monomer is vinyl fluoride, ethylene tetra-fluoride or propyiene hexafluoride.

7. A dielectric polymer material according to Claim 1, wherein the terpolymer is in an amount of at least 50% by weight and the remainder is a strongly dielectric ceramic material or a blend of such materials.

8. A dielectric polymer material according to Claim 1 or 7, wherein the terpolymer is formed in films or sheets.

9. A dielectric polymer material according to Claim 8, wherein the terpolymer is drawn or stretched uniaxially or biaxially.

## Revendications

1. Un matériau diélectrique polymère comprenant un copolymère ternaire d'au moins 75% de fluorure de vinylidène avec du trifluorure d'éthylène et du chlorure-trifluorure d'éthylène, caractérisé en ce qu'il comprend de 25 à 90 mol% de fluorure de vinylidène, de 5 à 70 mol% de trifluorure d'éthylène et de 0,5 à 30 mol% de chlorure-trifluorure d'éthylene.

2. Un matériau diélectrique polymère selon la revendication 1, caractérisé en ce que la proportion de fluorure de vinylidène est de 30 à 85 mol%.

3. Un matériau diélectrique polymère selon la revendication 1, dans lequel la proportion de trifluorure d'éthylène est de 10 à 65 mol%.

4. Un matériau diélectrique polymère selon la revendication 1, dans lequel la proportion de chlorure-trifluorure d'éthylène est de 1 à 25 mol%.

5. Un matériau diélectrique polymère selon la revendication 1, contenant en outre une petite proportion d'un monomère fluoré.

6. Un matériau diélectrique polymère selon la revendication 5, caractérisé en ce que le monomère fluoré est le fluorure de vinyle, le tétra-fluorure d'éthylène ou l'hexafluorure de propylène.

7. Un matériau diélectrique polymère selon la revendication 1, caractérisé en ce que le copolymère ternaire est présent en proportion d'au moins 50% en poids, le solde consistant en une matière céramique fortement diélectrique ou en un mélange de telles matières.

8. Un matériau diélectrique polymère selon la revendication 1 ou 7 dans lequel le copolymère ternaire est mis sous la forme de pellicules ou de feuilles.

9. Un matériau diélectrique polymère selon la revendication 8, caractérisé en ce que le copolymère ternaire est soumis à étirage uniaxial ou biaxial.

## Patentansprüche

1. Ein dielektrisches Polymermaterial, das ein Terpolymer aus wenigstens 75% Vinyliden-fluorid mit Ethylentrifluorid und Ethylenchlorid-trifluorid umfaßt, dadurch gekennzeichnet, daß es 25 bis 90 Mol% Vinylidenfluorid, 5 bis 70 Mol% Ethylentrifluorid und 0,5 bis 30 Mol% Ethylenchloridtrifluorid umfaßt.

2. Ein dielektrisches Polymermaterial nach Anspruch 1, bei dem Vinylidenfluorid in einer Menge von 30 bis 85 Mol% vorliegt.

3. Ein dielektrisches Polymermaterial nach Anspruch 1, bei dem Ethylentrifluorid in einer Menge von 10 bis 65 Mol% vorliegt.

4. Ein dielektrisches Polymermaterial nach Anspruch 1, bei dem Ethylenchloridtrifluorid in einer Menge von 1 bis 25 Mol% vorliegt.

5. Ein dielektrisches Polymermaterial nach Anspruch 1, das außerdem eine geringe Menge eines fluorhaltigen Monomeren enthält.

6. Ein dielektrisches Polymermaterial nach Anspruch 5, bei dem das fluorhaltige Monomere Vinylfluorid, Ethylentetrafluorid oder Propylenhexafluorid ist.

7. Ein dielektrisches Polymermaterial nach Anspruch 1, bei dem das Terpolymere in einer Menge von wenigstens 50 Gew.% vorliegt und der Rest ein stark dielektrisches keramisches Material oder eine Mischung derartiger Materialien ist.

8. Ein dielektrisches Polymermaterial nach Anspruch 1 oder 7, bei dem das Terpolymer als Folien oder Blätter ausgeformt ist.

9. Ein dielektrisches Polymermaterial nach Anspruch 8, bei dem das Terpolymer uniaxial oder biaxial gereckt oder gedehnt ist.

# FIG.1

DIELECTRIC CONSTANT (y-axis: 10, 30, 100)

TEMPERATURE (°C) (x-axis: 20, 50, 100, 150)

# FIG.2

DIELECTRIC CONSTANT (y-axis: 10, 30, 100)

TEMPERATURE (°C) (x-axis: 20, 50, 100, 150)

A

B

# FIG.3

# FIG.4

# FIG.5

# FIG.6